# EUROPEAN PATENT APPLICATION

(11) **EP 4 790 835 A1**
(43) Date of publication of application: **12.08.2026**
(21) Application number: 24874566.3
(22) Date of filing: 30.09.2024
(51) Int. Cl.: H01Q 7/00

(54) **LOOP ANTENNA**

(30) Priority: 06.10.2023 JP 2023174739
(71) Applicant: Panasonic Intellectual Property Management Co., Ltd., Kadoma-shi, Osaka 571-0057 (JP)
(72) Inventor: AKAGI Shigefumi, kadoma-shi, Osaka 571-0057 (JP); OTSUKA Fumio, kadoma-shi, Osaka 571-0057 (JP)
(74) Representative: Novagraaf International SA
(86) International application number: PCT/JP2024/034865
(87) International publication number: WO 2025/074964

(57) **Abstract**

Loop antenna (1) includes a plurality of loops, the plurality of loops are formed by one linear pattern, and the plurality of loops include first loop (10) and second loop (20).

## Description

### TECHNICAL FIELD

The present disclosure relates to a loop antenna.

### BACKGROUND ART

PTL 1 discloses a loop antenna that wirelessly transmits power.

### Citation List

### Patent Literature

PTL 1: International Publication No. 2016/016964

### SUMMARY OF THE INVENTION

For example, a loop antenna as disclosed in PTL 1 is provided in a reader or a writer. When an integrated circuit (IC) card approaches the reader or the writer, an induced voltage is generated in a loop antenna of the IC card, and communication between the IC card having no power supply and the reader or the writer becomes possible. However, even if the IC card and the reader or the writer approach each other, in a case where the center of the loop antenna of the IC card and the center of the loop antenna of the reader or the writer are misaligned, an induced voltage generated in the IC card becomes small, and communication between the IC card and the reader or the writer may not be possible.

Therefore, the present disclosure provides a loop antenna capable of suppressing a decrease in an induced voltage due to positional deviation from a counterpart loop antenna.

A loop antenna according to the present disclosure is on a substrate, the loop antenna including a plurality of loops when a pattern that makes one turn around an arbitrary point on the substrate is a loop, in which the plurality of loops are formed in one linear pattern, the plurality of loops include a first loop and a second loop, the one pattern is configured in an order of the first loop and the second loop from one end to other end of the one pattern, the first loop has a first portion and a second portion facing each other in a first direction, the second loop includes a third portion and a fourth portion facing each other in the first direction, and the first portion, the second portion, the third portion, and the fourth portion are arranged in an order of the first portion, the third portion, the second portion, and the fourth portion in the first direction in a plan view of the substrate.

Note that, these comprehensive or specific aspects may be implemented by system, device, method, recording medium, computer program, or by any combination of system, device, method, recording medium, and computer program.

According to the loop antenna of the present disclosure, it is possible to suppress a decrease in the induced voltage due to the positional deviation from the counterpart loop antenna.

### BRIEF DESCRIPTION OF THE DRAWINGS

Fig. 1 is a front transparent view illustrating a first example of a loop antenna according to an exemplary embodiment.
Fig. 2 is a front transparent view illustrating an example of a conventional loop antenna.
Fig. 3 is a graph illustrating an induced voltage for each offset amount generated in a counterpart loop antenna by the first example and the conventional loop antenna.
Fig. 4 is a front transparent view illustrating a second example of the loop antenna according to the exemplary embodiment.
Fig. 5 is a graph illustrating an induced voltage for each offset amount generated in a counterpart loop antenna by the second example and the conventional loop antenna.
Fig. 6 is a graph illustrating an induced voltage for each offset amount generated in a counterpart loop antenna by the second example and the conventional loop antenna.
Fig. 7 is a front transparent view illustrating a third example of a loop antenna according to the exemplary embodiment.
Fig. 8 is a front transparent view illustrating a fourth example of the loop antenna according to the exemplary embodiment.
Fig. 9 is a graph illustrating magnetic field intensities of the third example, the fourth example, and the conventional loop antenna.
Fig. 10 is a graph illustrating induced voltages for each offset amount generated in a counterpart loop antenna by the third example, the fourth example, and the conventional loop antenna.

### DESCRIPTION OF EMBODIMENT

The exemplary embodiments described hereinafter provide general or specific examples. Numerical values, shapes, materials, constituent elements, disposition positions and connection forms of the constituent elements, and the like described in the following exemplary embodiments are illustrative, and are not intended to limit the scope of the present disclosure.

### (Exemplary embodiment)

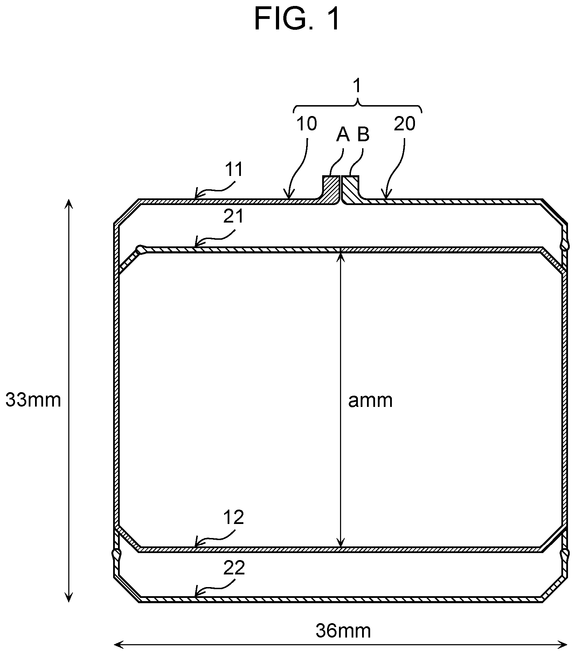

Hereinafter, a loop antenna according to an exemplary embodiment will be described with reference to Figs. 1 to 10. Hereinafter, a first example to a fourth example will be described.

First, the first example will be described.

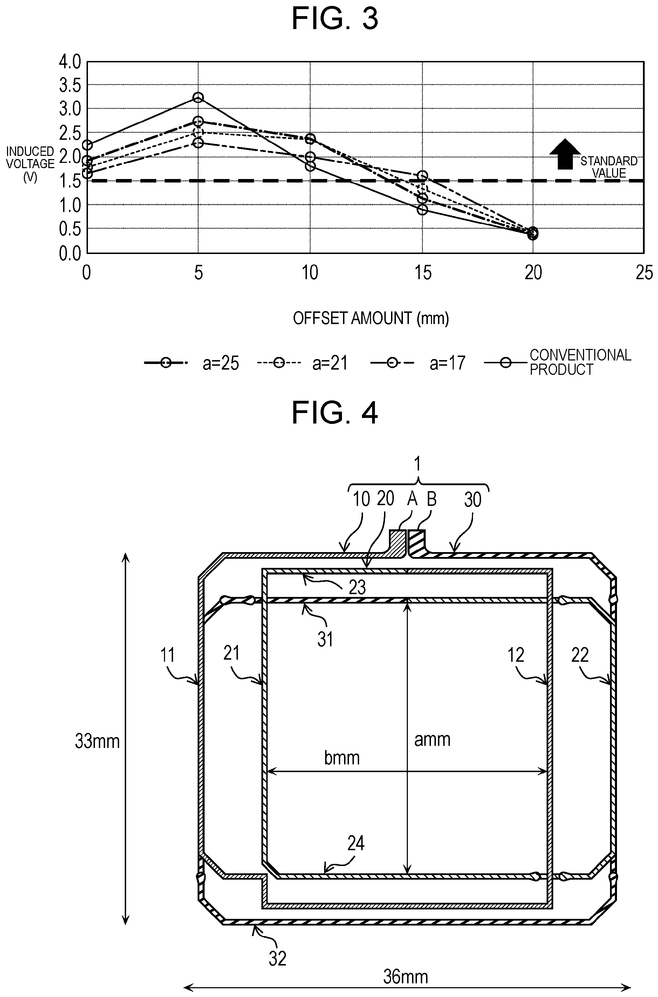

Fig. 1 is a front transparent view illustrating the first example of a loop antenna 1 according to an exemplary embodiment. Although loop antenna 1 is provided on the substrate, only loop antenna 1 is illustrated with the substrate transparent in Fig. 1. Also in Figs. 4, 7, and 8 to be described later, only loop antenna 1 is illustrated with the substrate transparent in the drawings. For example, the substrate is a double-sided substrate, and loop antenna 1 is provided over the front surface and the back surface of the substrate. Therefore, in Fig. 1, the portion of loop antenna 1 provided on the front surface of the substrate and the portion provided on the back surface of the substrate are partially overlapped. Loop antenna 1 is formed by, for example, a copper foil pattern on a substrate. For example, loop antenna 1 is provided in a reader or a writer in order to wirelessly transmit power to an IC card and wirelessly communicate with the IC card.

In a case where a pattern that makes one turn around an arbitrary point on the substrate is a loop, loop antenna 1 has a plurality of loops. The plurality of loops are formed by a single linear pattern. Each of the plurality of loops has a rectangular shape. For example, the loop antenna of the IC card often has a rectangular shape, and the plurality of loops also has a rectangular shape similarly to the loop antenna of the IC card, whereby the induced voltage generated in the counterpart loop antenna (the loop antenna of the IC card) can be increased.

The plurality of loops include first loop 10 and second loop 20. In loop antenna 1 of the first example, the plurality of loops are two loops of first loop 10 and second loop 20. That is, first loop 10 and second loop 20 are formed by one pattern. For example, a feedpoint is provided at one end A of one pattern, and unbalanced feeding is performed. In addition, feedpoints may be provided at both one end A and other end B of one pattern, and balanced feeding may be performed.

One pattern includes first loop 10 and second loop 20 in this order from one end A to other end B. Specifically, first loop 10 and second loop 20 are continuous, one end of first loop 10 is one end A, the other end of first loop 10 is one end of second loop 20, and the other end of the second loop is other end B. For convenience, the boundary between first loop 10 and second loop 20 is referred to as the other end of first loop 10 and one end of second loop 20, but in practice, the boundary between first loop 10 and second loop 20 is not provided so as to be visible.

First loop 10 has first portion 11 and second portion 12 facing each other in the first direction. In the first example, the first direction is a vertical direction of the paper surface of Fig. 1. Since each of the plurality of loops has a rectangular shape, first portion 11 and second portion 12 are sides facing each other in the first direction. First portion 11 constitutes one end A side of first loop 10 with respect to second portion 12 (that is, one end side of first loop 10).

Second loop 20 has third portion 21 and fourth portion 22 facing each other in the first direction. Since each of the plurality of loops has a rectangular shape, third portion 21 and fourth portion 22 are sides facing each other in the first direction. Third portion 21 constitutes one end A side of second loop 20 with respect to fourth portion 22 (that is, one end side of second loop 20).

In a plan view of the substrate, first portion 11, second portion 12, third portion 21, and fourth portion 22 are arranged in the order of first portion 11, third portion 21, second portion 12, and fourth portion 22 in the first direction as illustrated in Fig. 1. Specifically, in a plan view of the substrate, first portion 11, second portion 12, third portion 21, and fourth portion 22 are arranged in the order of first portion 11, third portion 21, second portion 12, and fourth portion 22 on an imaginary straight line extending in the first direction. In a plan view of the substrate, a distance between first portion 11 and third portion 21 and a distance between second portion 12 and fourth portion 22 (that is, a deviation amount in the first direction) are larger than a pattern width of one pattern constituting loop antenna 1. For example, the distance between first portion 11 and third portion 21 and the distance between second portion 12 and fourth portion 22 may be 4 mm or more, 6 mm or more, or 8 mm or more.

An effect obtained by forming loop antenna 1 such that first portion 11, second portion 12, third portion 21, and fourth portion 22 are arranged in the order of first portion 11, third portion 21, second portion 12, and fourth portion 22 in the first direction, that is, first loop 10 and second loop 20 are shifted in the first direction will be described in comparison with a conventional loop antenna.

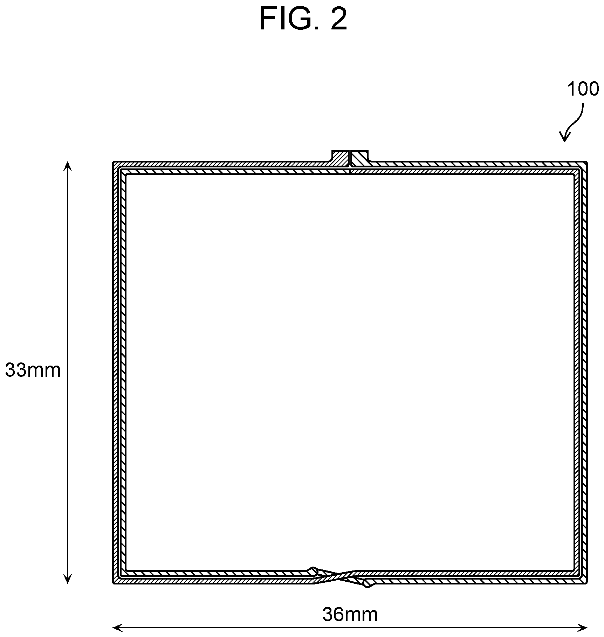

Fig. 2 is a front transparent view illustrating an example of conventional loop antenna 100. In conventional loop antenna 100, the loops are provided so as to be adjacent to each other at substantially the same position. Therefore, in conventional loop antenna 100, the deviation amount of each loop is smaller than the pattern width of one pattern constituting loop antenna 100.

For example, loop antenna 1 of the first example and conventional loop antenna 100 have a size of 33 mm in the vertical direction (first direction) and a size of 36 mm in the horizontal direction (second direction intersecting the first direction). In addition, the distance between third portion 21 and second portion 12 of loop antenna 1 of the first example is set to a mm, and the effects in the case of a = 25, the case of a = 21, and the case of a = 17 are verified.

Fig. 3 is a graph illustrating an induced voltage for each offset amount generated in a counterpart loop antenna by the first example and the conventional loop antenna.

When an IC card approaches the reader or the writer, an induced voltage is generated in a loop antenna of the IC card, and communication between the IC card having no power supply and the reader or the writer becomes possible. However, even if the IC card and the reader or the writer approach each other, in a case where the center of the loop antenna of the IC card and the center of the loop antenna of the reader or the writer are misaligned, an induced voltage generated in the IC card becomes small, and communication between the IC card and the reader or the writer may not be possible. On the other hand, in loop antenna 1 of the first example, it is possible to suppress a decrease in the induced voltage due to the positional deviation from the counterpart loop antenna (the loop antenna of the IC card).

In Fig. 3, the horizontal axis represents a deviation amount (referred to as an offset amount) between the center of the loop antenna of the IC card and the center of loop antenna 1 or 100, and the vertical axis represents an induced voltage generated in the loop antenna of the IC card. For example, the offset amount is a deviation amount in the first direction. For example, here, 1.5 V is set as the standard value as the induced voltage, and it is assumed that the reader or the writer and the IC card can normally communicate with each other when an induced voltage of 1.5 V or more is generated.

As illustrated in Fig. 3, according to loop antenna 1 of the first example, the offset amount by which the induced voltage is equal to or higher than the standard value (for example, 1.5 V) is larger than that of conventional loop antenna 100 in any case of a = 25, a = 21, and a = 17. For example, in conventional loop antenna 100, when the offset amount exceeds about 12 mm, the induced voltage becomes smaller than the standard value, but in loop antenna 1 of the first example in the case of a = 17, the induced voltage is equal to or larger than the standard value even when the offset amount is about 15 mm.

Further, regarding loop antenna 1 of the first example, when the offset amount is about 13 mm or less, the induced voltage tends to increase as a is larger, and when the offset amount is more than about 13 mm, the induced voltage tends to decrease as a is larger. Since the characteristic capable of maintaining the induced voltage equal to or higher than the standard value even when the offset amount increases is ideal, among a = 25, a = 21, and a = 17, the characteristic at a = 17, that is, the characteristic at the distance between first portion 11 and third portion 21 and the distance between second portion 12 and fourth portion 22 of 8 mm is the best.

As described above, in the first example, since loop antenna 1 is formed such that first loop 10 and second loop 20 are shifted in the first direction, it is possible to suppress a decrease in the induced voltage due to the positional deviation from the counterpart loop antenna.

Next, a second example will be described.

Fig. 4 is a front transparent view illustrating a second example of loop antenna 1 according to the exemplary embodiment. Hereinafter, differences from the first example will be mainly described.

The plurality of loops include first loop 10, second loop 20, and third loop 30. In loop antenna 1 of the second example, the plurality of loops are three loops of first loop 10, second loop 20, and third loop 30. That is, first loop 10, second loop 20, and third loop 30 are formed by one pattern.

One pattern includes first loop 10, second loop 20, and third loop 30 in this order from one end A to other end B. Specifically, first loop 10 and second loop 20 are continuous, second loop 20 and third loop 30 are continuous, one end of first loop 10 is one end A, and the other end of first loop 10 is one end of second loop 20. The other end of second loop 20 is one end of third loop 30, and the other end of third loop 30 is other end B. For convenience, the boundary between first loop 10 and second loop 20 is referred to as the other end of first loop 10 and one end of second loop 20, but in practice, the boundary between first loop 10 and second loop 20 is not provided so as to be visible. Similarly, the boundary between second loop 20 and third loop 30 is referred to as the other end of second loop 20 and one end of third loop 30, but in practice, the boundary between second loop 20 and third loop 30 is not provided so as to be visible.

First loop 10 has first portion 11 and second portion 12 facing each other in the first direction. In the second example, the first direction is a left-right direction on the paper surface of Fig. 4. Since each of the plurality of loops has a rectangular shape, first portion 11 and second portion 12 are sides facing each other in the first direction. First portion 11 constitutes one end A side of first loop 10 with respect to second portion 12 (that is, one end side of first loop 10).

Second loop 20 has third portion 21 and fourth portion 22 facing each other in the first direction. Since each of the plurality of loops has a rectangular shape, third portion 21 and fourth portion 22 are sides facing each other in the first direction. Third portion 21 constitutes one end A side of second loop 20 with respect to fourth portion 22 (that is, one end side of second loop 20).

Second loop 20 has fifth portion 23 and sixth portion 24 facing each other in a second direction intersecting the first direction. In the second example, the second direction is the vertical direction of the paper surface of Fig. 4. Since each of the plurality of loops has a rectangular shape, fifth portion 23 and sixth portion 24 are sides facing each other in the second direction. Fifth portion 23 constitutes one end A side of second loop 20 with respect to sixth portion 24 (that is, one end side of second loop 20). Fifth portion 23 constitutes one end A side of second loop 20 with respect to third portion 21. Third portion 21 constitutes one end A side of second loop 20 with respect to sixth portion 24. Sixth portion 24 constitutes one end A side of second loop 20 with respect to fourth portion 22.

Third loop 30 has seventh portion 31 and eighth portion 32 facing each other in the second direction. Since each of the plurality of loops has a rectangular shape, seventh portion 31 and eighth portion 32 are sides facing each other in the second direction. Seventh portion 31 constitutes one end A side of third loop 30 with respect to eighth portion 32 (that is, one end side of third loop 30).

In a plan view of the substrate, first portion 11, second portion 12, third portion 21, and fourth portion 22 are arranged in the order of first portion 11, third portion 21, second portion 12, and fourth portion 22 in the first direction as illustrated in Fig. 4. Specifically, in a plan view of the substrate, first portion 11, second portion 12, third portion 21, and fourth portion 22 are arranged in the order of first portion 11, third portion 21, second portion 12, and fourth portion 22 on an imaginary straight line extending in the first direction. In a plan view of the substrate, a distance between first portion 11 and third portion 21 and a distance between second portion 12 and fourth portion 22 (that is, a deviation amount in the first direction) are larger than a pattern width of one pattern constituting loop antenna 1. For example, the distance between first portion 11 and third portion 21 and the distance between second portion 12 and fourth portion 22 may be 5.5 mm or more, 7.5 mm or more, or 9.5 mm or more.

In a plan view of the substrate, fifth portion 23, sixth portion 24, seventh portion 31, and eighth portion 32 are arranged in the order of fifth portion 23, seventh portion 31, sixth portion 24, and eighth portion 32 in the second direction. Specifically, in a plan view of the substrate, fifth portion 23, sixth portion 24, seventh portion 31, and eighth portion 32 are arranged in the order of fifth portion 23, seventh portion 31, sixth portion 24, and eighth portion 32 on an imaginary straight line extending in the second direction. In a plan view of the substrate, a distance between fifth portion 23 and seventh portion 31 and a distance between sixth portion 24 and eighth portion 32 (that is, a deviation amount in the second direction) are larger than a pattern width of one pattern constituting loop antenna 1. For example, the distance between fifth portion 23 and seventh portion 31 and the distance between sixth portion 24 and eighth portion 32 may be 2 mm or more, 3 mm or more, or 4 mm or more.

An effect obtained by forming loop antenna 1 such that first portion 11, second portion 12, third portion 21, and fourth portion 22 are arranged in the order of first portion 11, third portion 21, second portion 12, and fourth portion 22 in the first direction, and fifth portion 23, sixth portion 24, seventh portion 31, and eighth portion 32 are arranged in the order of fifth portion 23, seventh portion 31, sixth portion 24, and eighth portion 32 in the second direction, that is, first loop 10 and second loop 20 are shifted in the first direction and second loop 20 and third loop 30 are shifted in the second direction will be described in comparison with conventional loop antenna 100.

For example, loop antenna 1 of the second example and conventional loop antenna 100 have a size of 33 mm in the vertical direction (second direction) and a size of 36 mm in the horizontal direction (first direction). In addition, in loop antenna 1 of the second example, the distance between seventh portion 31 and sixth portion 24 is set to a mm, the distance between third portion 21 and second portion 12 is set to b mm, and in a state of being fixed at b = 25, the effects of a = 25, a = 21, and a = 17 are verified, and in a state of being fixed at a = 25, the effects of b = 25, b = 21, and b = 17 are verified.

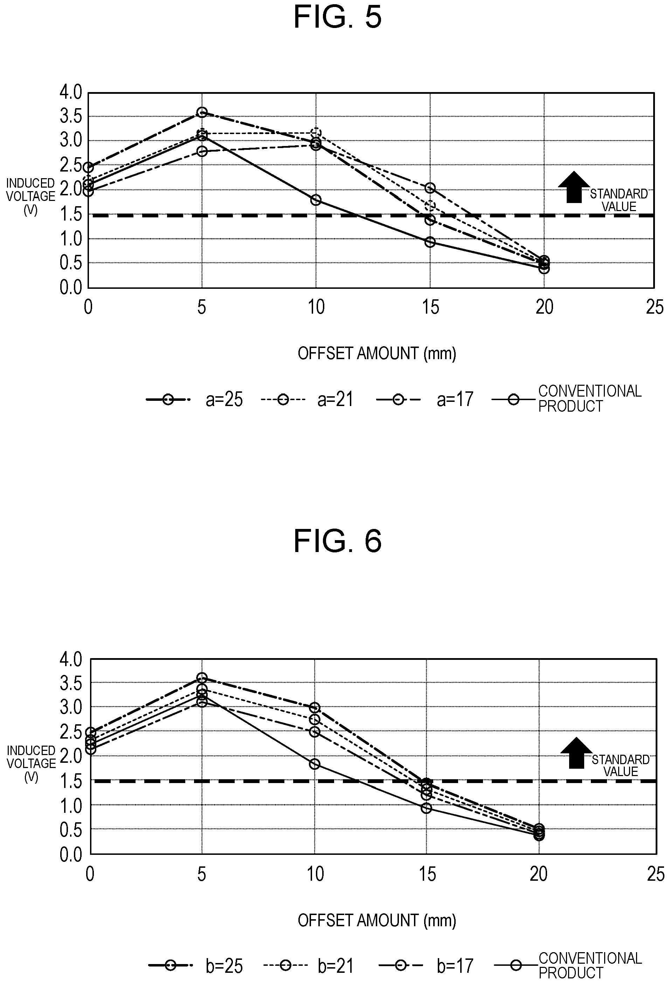

Figs. 5 and 6 are graphs illustrating an induced voltage for each offset amount generated in a counterpart loop antenna by the second example and the conventional loop antenna. Fig. 5 illustrates a verification result in a state where b = 25 is fixed, and Fig. 6 illustrates a verification result in a state where a = 25 is fixed.

In Figs. 5 and 6, the horizontal axis represents a deviation amount (referred to as an offset amount) between the center of the loop antenna of the IC card and the center of loop antenna 1 or 100, and the vertical axis represents an induced voltage generated in the loop antenna of the IC card. For example, the offset amount is a deviation amount in the second direction. For example, here, 1.5 V is set as the standard value as the induced voltage, and it is assumed that the reader or the writer and the IC card can normally communicate with each other when an induced voltage of 1.5 V or more is generated.

As illustrated in Fig. 5, according to loop antenna 1 of the second example, the offset amount by which the induced voltage is equal to or higher than the standard value (for example, 1.5 V) is larger than that of conventional loop antenna 100 in any case of a = 25, a = 21, and a = 17 when b = 25 is fixed. For example, in conventional loop antenna 100, when the offset amount exceeds about 12 mm, the induced voltage becomes smaller than the standard value, but in loop antenna 1 of the second example in the case of a = 17, the induced voltage is equal to or larger than the standard value even when the offset amount is about 17 mm.

Further, regarding loop antenna 1 of the second example, when the offset amount is about 10 mm or less, the induced voltage tends to increase as a is larger, and when the offset amount is more than about 10 mm, the induced voltage tends to decrease as a is larger. Since the characteristic capable of maintaining the induced voltage equal to or higher than the standard value even when the offset amount increases is ideal, the characteristic at a = 17 is the best among a = 25, a = 21, and a = 17.

As illustrated in Fig. 6, according to loop antenna 1 of the second example, the offset amount by which the induced voltage is equal to or higher than the standard value (for example, 1.5 V) is larger than that of conventional loop antenna 100 in any case of b = 25, b = 21, and b = 17 when a = 25 is fixed. In addition, with respect to loop antenna 1 of the second example, since the induced voltage tends to increase as b increases, the characteristic at b = 25 is the best among b = 25, b = 21, and b = 17.

As described above, in the second example, since loop antenna 1 is formed such that first loop 10 and second loop 20 are shifted in the first direction and second loop 20 and third loop 30 are shifted in the second direction, it is possible to further suppress a decrease in the induced voltage due to the positional deviation from the counterpart loop antenna.

Next, a third example and a fourth example will be described.

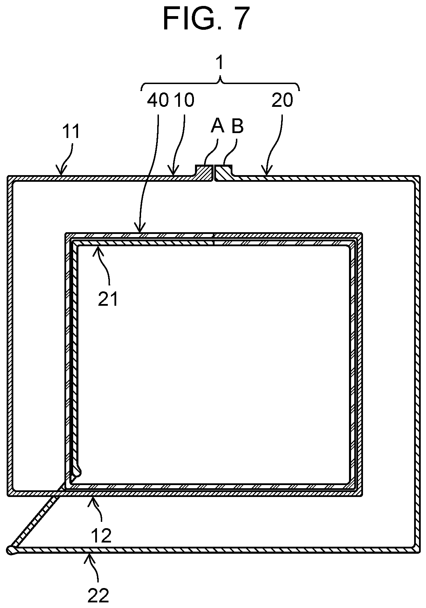

Fig. 7 is a front transparent view illustrating a third example of loop antenna 1 according to the exemplary embodiment. Hereinafter, differences from the first example will be mainly described.

The plurality of loops include first loop 10 and second loop 20. In loop antenna 1 of the third example, the plurality of loops are three loops of first loop 10, fourth loop 40, and second loop 20. That is, first loop 10, fourth loop 40, and second loop 20 are formed by one pattern.

One pattern includes first loop 10, fourth loop 40, and second loop 20 in this order from one end A to other end B. Specifically, first loop 10 and fourth loop 40 are continuous, fourth loop 40 and second loop 20 are continuous, one end of first loop 10 is one end A, and the other end of first loop 10 is one end of fourth loop 40. The other end of fourth loop 40 is one end of second loop 20, and the other end of second loop 20 is other end B. For convenience, the boundary between first loop 10 and fourth loop 40 is referred to as the other end of first loop 10 and one end of fourth loop 40, but actually, the boundary between first loop 10 and fourth loop 40 is not provided so as to be visible. Similarly, the boundary between fourth loop 40 and second loop 20 is referred to as the other end of fourth loop 40 and one end of second loop 20, but in practice, the boundary between fourth loop 40 and second loop 20 is not provided to be visible.

In loop antenna 1 of the first example, first loop 10 and second loop 20 are continuous, but first loop 10 and second loop 20 may not be continuous as in loop antenna 1 of the third example, and another loop may be provided as in fourth loop 40. Even when another loop is provided between first loop 10 and second loop 20, focusing on first loop 10 and second loop 20, one pattern is configured in the order of first loop 10 and second loop 20 from one end A to other end B.

First portion 11 and second portion 12 of first loop 10 and third portion 21 and fourth portion 22 of second loop 20 in loop antenna 1 of the third example are basically in the same positional relationship as those in loop antenna 1 of the first example, and thus description thereof is omitted.

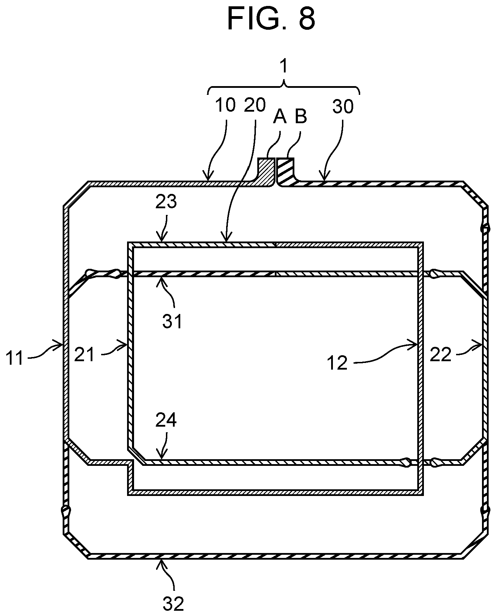

Fig. 8 is a front transparent view illustrating a fourth example of loop antenna 1 according to the exemplary embodiment.

The plurality of loops include first loop 10, second loop 20, and third loop 30. Although loop antenna 1 of the fourth example is different in shape from loop antenna 1 of the second example, the positional relationship and the like of first portion 11 and second portion 12 of first loop 10, third portion 21, fourth portion 22, fifth portion 23, and the sixth portion of second loop 20, and seventh portion 31 and eighth portion 32 of third loop 30 are basically the same as those in loop antenna 1 of the second example, and thus description thereof is omitted.

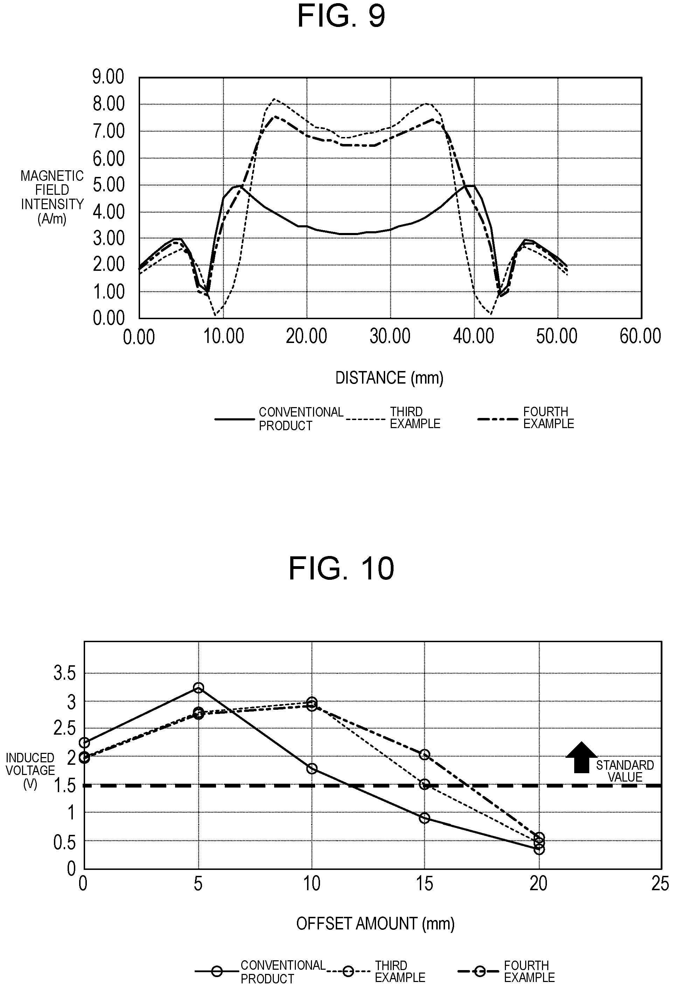

The magnetic field intensities of the third example, the fourth example, and the conventional loop antenna will be described with reference to Fig. 9, and the induced voltages generated in the counterpart loop antenna by the third example, the fourth example, and the conventional loop antenna will be described with reference to Fig. 10.

Fig. 9 is a graph illustrating magnetic field intensities of the third example, the fourth example, and the conventional loop antenna. The horizontal axis in Fig. 9 indicates the distance in the horizontal direction on the paper of Figs. 2, 7, and 8, and 26 mm corresponds to the center of the third example, the fourth example, and the conventional loop antenna. Fig. 9 is a graph illustrating the magnetic field intensity on a line in the horizontal direction of the paper at a position (that is, a position shifted by 15 mm in the vertical direction on the paper from the center of each loop antenna in Figs. 2, 7, and 8.) where the offset amount is 15 mm.

As illustrated in Fig. 9, conventional loop antenna 100 has a magnetic field intensity of 3.16 A/m at a position of 26 mm, loop antenna 1 of the third example has a magnetic field intensity of 6.81 A/m at a position of 26 mm, and loop antenna 1 of the fourth example has a magnetic field intensity of 6.47 A/m at a position of 26 mm.

Fig. 10 is a graph illustrating induced voltages for each offset amount generated in a counterpart loop antenna by the third example, the fourth example, and the conventional loop antenna.

In Fig. 10, the horizontal axis represents a deviation amount (referred to as an offset amount) between the center of the loop antenna of the IC card and the center of loop antenna 1, and the vertical axis represents an induced voltage generated in the loop antenna of the IC card. For example, the offset amount is a deviation amount in the first direction (vertical direction) in the third example, and a deviation amount in the second direction (vertical direction) in the fourth example. For example, here, 1.5 V is set as the standard value as the induced voltage, and it is assumed that the reader or the writer and the IC card can normally communicate with each other when an induced voltage of 1.5 V or more is generated.

As illustrated in Fig. 9, it can be seen that loop antennas 1 of the third example and the fourth example have a larger magnetic field intensity in the central portion than conventional loop antenna 100. In addition, as illustrated in Fig. 10, it can be seen that loop antennas 1 of the third example and the fourth example are allowed to have a larger offset amount than conventional loop antenna 100. Furthermore, it can be seen that a larger offset amount is allowed in loop antenna 1 of the fourth example in which first loop 10 and second loop 20 are shifted in the first direction and second loop 20 and third loop 30 are shifted in the second direction than in loop antenna 1 of the third example in which the first loop 10 and the second loop 20 are shifted in the first direction.

### (Other exemplary embodiments)

As described above, the loop antenna 1 of the present disclosure has been described above based on the exemplary embodiments, but the present disclosure is not limited to the exemplary embodiments. Configurations in which various modifications conceivable by those skilled in the art are applied to the present exemplary embodiments and forms constructed by combining constituent elements in different exemplary embodiments are also included in the scope of the present disclosure without departing from the gist of the present disclosure.

For example, in the above exemplary embodiment, the example in which loop antenna 1 is provided in the reader or the writer and the communication partner is an IC card has been described, but loop antenna 1 may be provided in a notebook personal computer (PC), a smartphone, or the like, and the communication partner is not limited to the IC card and may be an IC tag or the like.

For example, in the above exemplary embodiment, the example in which each of the plurality of loops has a rectangular shape has been described, but the plurality of loops may have a circular shape or the like.

For example, in the above exemplary embodiment, the example in which the substrate on which loop antenna 1 is provided is a double-sided substrate has been described, but a multilayer substrate or the like may be used.

The scope of the present disclosure should include modifications that those skilled in the art can obtain by adding various design changes to the exemplary embodiments described above, as well as modifications implemented by freely combining components and functions described in the exemplary embodiments without deviating from the gist of the present disclosure.

### (Supplementary note)

The above description of the exemplary embodiments discloses the following techniques.

(Technique 1) A loop antenna provided on a substrate, the loop antenna including a plurality of loops when a pattern that makes one turn around an arbitrary point on the substrate is a loop, in which the plurality of loops are formed in one linear pattern, the plurality of loops include a first loop and a second loop, the one pattern is configured in an order of the first loop and the second loop from one end to other end of the one pattern, the first loop has a first portion and a second portion facing each other in a first direction, the second loop includes a third portion and a fourth portion facing each other in the first direction, and the first portion, the second portion, the third portion, and the fourth portion are arranged in an order of the first portion, the third portion, the second portion, and the fourth portion in the first direction in a plan view of the substrate.

As described above, since loop antenna is formed such that the first loop and the second loop are shifted in the first direction, it is possible to suppress a decrease in the induced voltage due to the positional deviation from the counterpart loop antenna.

(Technique 2) The loop antenna according to Technique 1, in which each of the plurality of loops has a rectangular shape, the first portion and the second portion are sides facing each other in the first direction, and the third portion and the fourth portion are sides facing each other in the first direction.

For example, the loop antenna of the IC card often has a rectangular shape, and the plurality of loops also has a rectangular shape similarly to the loop antenna of the IC card, whereby the induced voltage generated in the counterpart loop antenna can be increased.

(Technique 3) The loop antenna according to Technique 1 or 2, in which a distance between the first portion and the third portion and a distance between the second portion and the fourth portion in a plan view of the substrate are larger than a pattern width of the one pattern.

As described above, since the deviation amount in the first direction between the first loop and the second loop is larger than the pattern width, it is possible to suppress a decrease in the induced voltage due to the positional deviation from the counterpart loop antenna.

(Technique 4) The loop antenna according to Technique 1, in which the plurality of loops further include a third loop, the one pattern is configured in an order of the first loop, the second loop, and the third loop from one end to other end of the one pattern, the second loop includes a fifth portion and a sixth portion facing each other in a second direction intersecting the first direction,
the third loop has a seventh portion and an eighth portion facing each other in the second direction, and the fifth portion, the sixth portion, the seventh portion, and the eighth portion are arranged in an order of the fifth portion, the seventh portion, the sixth portion, and the eighth portion in the second direction in a plan view of the substrate.

As described above, since loop antenna is formed such that first loop and second loop are shifted in the first direction and second loop and third loop are shifted in the second direction, it is possible to further suppress a decrease in the induced voltage due to the positional deviation from the counterpart loop antenna.

(Technique 5) The loop antenna according to Technique 4, in which each of the plurality of loops has a rectangular shape, the first portion and the second portion are sides facing each other in the first direction, the third portion and the fourth portion are sides facing each other in the first direction, the fifth portion and the sixth portion are sides facing each other in the second direction, and the seventh portion and the eighth portion are sides facing each other in the second direction.

For example, the loop antenna of the IC card often has a rectangular shape, and the plurality of loops also has a rectangular shape similarly to the loop antenna of the IC card, whereby the induced voltage generated in the counterpart loop antenna can be increased.

(Technique 6) The loop antenna according to Technique 4 or 5, in which a distance between the first portion and the third portion, a distance between the second portion and the fourth portion, a distance between the fifth portion and the seventh portion, and a distance between the sixth portion and the eighth portion in a plan view of the substrate are larger than a pattern width of the one pattern.

As described above, since the deviation amount in the first direction between the first loop and the second loop is larger than the pattern width and the deviation amount in the second direction between the second loop and the third loop is larger than the pattern width, it is possible to suppress a decrease in the induced voltage due to the positional deviation from the counterpart loop antenna.

### INDUSTRIAL APPLICABILITY

The present disclosure can be applied to a reader or a writer for communicating with an IC card, and the like.

### REFERENCE MARKS IN THE DRAWINGS

- 1, 100: loop antenna
- 10: first loop
- 11: first portion
- 12: second portion
- 20: second loop
- 21: third portion
- 22: fourth portion
- 23: fifth portion
- 24: sixth portion
- 30: third loop
- 31: seventh portion
- 32: eighth portion
- A: one end
- B: other end

## Claims

1. A loop antenna provided on a substrate, the loop antenna comprising a plurality of loops when a pattern that makes one turn around an arbitrary point on the substrate is a loop, wherein
the plurality of loops are formed in one linear pattern,
the plurality of loops include a first loop and a second loop,
the one pattern is configured in an order of the first loop and the second loop from one end to other end of the one pattern,
the first loop has a first portion and a second portion facing each other in a first direction,
the second loop includes a third portion and a fourth portion facing each other in the first direction, and
the first portion, the second portion, the third portion, and the fourth portion are arranged in an order of the first portion, the third portion, the second portion, and the fourth portion in the first direction in a plan view of the substrate.

2. The loop antenna according to claim 1, wherein
each of the plurality of loops has a rectangular shape,
the first portion and the second portion are sides facing each other in the first direction, and
the third portion and the fourth portion are sides facing each other in the first direction.

3. The loop antenna according to claim 1 or 2, wherein
a distance between the first portion and the third portion and a distance between the second portion and the fourth portion in a plan view of the substrate are larger than a pattern width of the one pattern.

4. The loop antenna according to claim 1, wherein
the plurality of loops further include a third loop,
the one pattern is configured in an order of the first loop, the second loop, and the third loop from one end to other end of the one pattern,
the second loop includes a fifth portion and a sixth portion facing each other in a second direction intersecting the first direction,
the third loop has a seventh portion and an eighth portion facing each other in the second direction, and
the fifth portion, the sixth portion, the seventh portion, and the eighth portion are arranged in an order of the fifth portion, the seventh portion, the sixth portion, and the eighth portion in the second direction in a plan view of the substrate.

5. The loop antenna according to claim 4, wherein
each of the plurality of loops has a rectangular shape,
the first portion and the second portion are sides facing each other in the first direction,
the third portion and the fourth portion are sides facing each other in the first direction,
the fifth portion and the sixth portion are sides facing each other in the second direction, and
the seventh portion and the eighth portion are sides facing each other in the second direction.

6. The loop antenna according to claim 4 or 5, wherein
a distance between the first portion and the third portion, a distance between the second portion and the fourth portion, a distance between the fifth portion and the seventh portion, and a distance between the sixth portion and the eighth portion in a plan view of the substrate are larger than a pattern width of the one pattern.
